# EUROPEAN PATENT APPLICATION

(11) **EP 2 960 729 A1**
(43) Date of publication of application: **30.12.2015**
(21) Application number: 14754528.9
(22) Date of filing: 17.02.2014
(51) Int. Cl.: G05B 15/02, H04L 12/28

(54) **DISTRIBUTED SYSTEM OF ELEMENTS INTEGRATED INTO NODES FOR THE CONTROL AND MANAGEMENT OF ELECTRONICALLY CONTROLLABLE ELEMENTS AND METHOD FOR THE OPERATION THEREOF**

(30) Priority: 19.02.2013 ES 201330223
(71) Applicant: Segura Perez, Javier, 03015 Alicante (ES)
(72) Inventor: Segura Perez, Javier, 03015 Alicante (ES)
(74) Representative: Rizzo, Sergio
(86) International application number: PCT/ES2014/070116
(87) International publication number: WO 2014/128326

(57) **Abstract**

Distributed system of elements (1) built into nodes (2) for the control and management of electronically controllable elements. Each node (2) consists of a hardware and software layer, and the elements of each node are related to elements from the same or other nodes through links that determine the circulation of each event, the functionality of each element being defined by at least one link (3) and at least one configuration (1) translated into the system's language with the configuration software tool.

Operating procedure of the system that comprises the receipt and sending of events for registering and configuring nodes from the configuration tool as well as the activation (23) of the sending by a node (2), receipt (24) in another node, processing of the information (25), receipt (26) of the event in elements (1) of the receiver nodes, execution (27), checking (28) to see if a new event needs to be generated or not, and the generation of this (28.2) or not (28.1), according to the configuration.

## Description

### Technical field of the invention

This invention corresponds to the technical field of the systems used in applications comprising electronically controllable elements, carrying out their management.

### Background to the Invention

One of the technical fields that has been advancing most in recent times is systems for the control and management of facilities. Here we can include a huge range of types of application, from controlling large energy production facilities, such as wind farms or solar plants, to domestic homes, commonly known as domotic applications.

There are currently a number of systems for controlling facilities and automating tasks, either remotely or autonomously by the system itself. However, most of the companies dedicated to these types of systems, where there is strong competition, develop their own systems whose elements are not compatible with those from any other company. So significant limitations exist because once a control system has been acquired, the development of the technology to improve that system depends on the progress of just one company, not of the industry as a whole. In addition, the customer depends on just one company for the system's maintenance, repair and extension (when possible), which eliminates competition, resulting in the final consumer being worse off. Therefore, the first technical problem that arises is that of standardising these control or management systems, regardless of the platform, manufacturer or type of device to be controlled, allowing it to adapt to both the existing technologies and any future technologies that could appear.

One way of resolving this technical problem is to modularise the elements of the installation so that every component element of the installation is configured from different modules. This means creating modules that, by themselves, lack a defined functionality, but when combined together offer any possible functionality. They can be adapted to any type of technology so that in each particular case there are suitable modules allowing the system to work properly. In this way, the adoption of any type of technology is possible simply by implementing the necessary module so that a certain type of technology is adapted to the installation being used.

However, to be able to obtain modules like those discussed, in which each of them performs a function according to how it has been combined with the rest and depending on the instructions established in advance by the user, it is necessary to combine the technology in the current control systems (i.e., the current hardware) with the software development, so that these elements are capable of processing the information in different ways and therefore it is just a matter of choosing the most suitable option from all those possible. Currently, in telecontrol systems, in which there are a certain number of elements with a defined functionality, it is the installation which has to adapt to the telecontrol and not the other way round, making it extremely expensive and sometimes impossible to expand systems already in place and the solutions provided are not fully in keeping with what is sought, but rather act as approximations. For example, in a house where the gas boiler has been automated in such a way that it operates according to some defined parameters (on and off time, ambient temperature, division by area, etc.) the introduction of a new dependency or the desire to extend the installation to non-heated areas (a storage room, for example) creates the need to completely modify the system both physically and in its programming, making it necessary for the installation company to intervene. Therefore, a second technical problem that has to be resolved is the scalability of the telecontrol system, converting it into a distributed system that enables the problems with these systems to be overcome.

Currently we are aware of attempts to resolve the aforementioned problems through introducing manufacturing system standards, such as the KNX standard for domotic installations. However, this is only a partial solution since, although it has several manufacturers within a single type of system, they are subject to manufacturing regulations that restrict the flexibility to adapt to a specific problem and they offer few options when it comes to fixing an installation. For example, the KNX standard introduces a communication protocol cable throughout the entire system, which makes it mandatory to install cabling throughout the entire building.

At present we are also aware of the existence of different communication protocols such as Ethernet, ZigBee, Bluetooth, Wi-Fi, etc., which are used to a greater or lesser extent in facility control systems, with the features of each determining whether they are used more in one type of facility than others. These protocols are commonly used in automating facilities, with the limitations being the properties of each protocol.

Therefore, a third technical problem with the current technology is the lack of versatility since the current control systems are limited by a single protocol, when it would be advisable to use several of them depending on the facility and its specific characteristics, and even being capable of providing adequate solutions for future extensions of the facility concerned, even when the needs that will arise are not entirely clear.

In practice, any control system, whatever protocol is used, can be extended with other devices or even with other systems that use different protocols. However, the problem that anyone who tries to carry out an extension of this type will find is that the system to be extended has first to be configured individually and then when doing the extension every device or system to be added must also be configured individually. If the system added uses a different protocol, even the connection translator between them will have to be configured manually.

This generates enormous difficulty in the configuration process and with any system extensions because there may be a large number of devices to be configured in each system, which leads to a high potential for error.

Finally, all the facility control systems described are based on the concept of a sensor, controller, actuator and interface, with a single device being able to perform several of these functions, which would simply be the combination of two of the described elements into one. This concept of the installation inevitably leads to a lack of flexibility when it comes to creating the control system and this ultimately results in high costs and a significant limitation of the possibilities offered by the system.

There are different documents that reflect the state of technology discussed. For example, reference document US2007242688A1 describes the arrangement of a system formed by controllers, sensors, switches, alarms, actuators, fans, humidifiers etc. which are arranged in such a way that all the system elements can be configured to work at intervals rather than continuously, so that the amount of information that circulates around the system is reduced, therefore avoiding overloading the communications bus, a common problem in wireless networks. It also describes how the devices have to be built for their operation in the system. In this patent the nodes are specific devices, i.e., a sensor, actuator, controller or similar element. In addition, it describes a system in which each node has its corresponding physical communications channel with the other nodes. In this system information goes from origin to destination passing through other nodes if necessary. However, the system is not capable of amending the information along the route. A work station is also necessary to be able to save logs and information relating to the system as well as to be able to programme and make changes. The system is designed to suitably balance the information load with the extra processing that wireless communication entails and therefore it is not an easily scalable system.

Reference document US20100271989 describes a system that comprises a series of nodes connected wirelessly, where each has a certain function, there being sensor nodes and controller nodes, among others. Document US 20100257295 describes a system focused on improving the exchange of information between wireless communication devices and controllers, establishing a system of configuring packages through group identifiers, so that instead of sending a packet of information to every element which then checks whether the information relates to it, it sends a single packet to its recipient. Like the previous document, It is also based on wireless communication and is focused on improving and balancing the bandwidth Therefore, there is a fixed communication protocol.

Reference document US20080037571 is exclusively aimed at domotics and describes a new piece of equipment called the device manager to resolve the problem that exists in the multimedia network (such as HAVI or MOST) standards when two devices simultaneously want to access a third, for example when an automatic intercom, a music player and a telephone want to access the same speaker. The devices are based on the communication between an output (called a source) and an input (called a sink). It describes how the device manager has to be configured to avoid overlapping events. The technical problem solved in this document is only the multiple access to a single resource It does not describe how to extend or modify the system, given that the objective is precisely to manage access to a single device, not to several.

Reference document US20050085930 describes a method for facilitating the control of automated elements in a facility. It describes how to implement a device (hardware) and how to implement the steps needed to configure the device based on a system of grouping statuses (of the devices, such as on/off for a lamp, a value for a light regulator, etc.), naming that grouping of states a scenario. It basically deals with assigning labels to the devices so that when a scenario is created, the scenario indicates the devices that are going to be included and through the described method it ensures that these devices operate quicker when responding to external changes. This document describes how to create a scenario configuration flow, understanding scenarios as the set of statuses that a device can have. This document does not describe a node system that allows for the individual configuration and control of the devices. This document only describes the management of events in the devices themselves, i.e., the management of the information provided to the devices, but under no circumstances does it solve the problem of the versatility or scalability of the system. In fact, with this solution, if we scale up the system it is possible that the problems in managing information are significantly multiplied.

Finally, reference document US2011154375 consists of a system that, through a hardware platform (a physical device such as an iPad or a computer) provides a type of common connection for any type of sensor or actuator. A program is created for every type of sensor or actuator that it manages (generic driver), including this as an extra program in the hardware platform. The method for carrying out this system is also explained. It is a centralised platform and the programming requires the user to be qualified. In this case, it uses a computer to which all the sensors are connected and a specialist user (programmer or someone with high levels of expertise) creates the program in code so that the desired function is executed. This document does not describe a distributed system.

### Description of the invention

It is well known that in the current technology there are two types of solution for a distributed control system: (a) solutions that we can call specific, that consist of developing the specific electronic control circuits for each element to control, obviously including the circuit board and the programming of the controller(s); and (b) commercial solutions, that consist of controlling elements that are more or less standardised, like an industrial embedded PC, that simply have to be installed and programmed.

In the first case, the solutions are excessively expensive and have the disadvantage of having to be redesigned from scratch for every application. The second, which is also very expensive, has the disadvantage of not having the versatility of the first (its ability to adapt to all environments is not, logically, as good as when designing a specific system) and it also requires complicated programming for each specific case.

The purpose of the invention is to establish a control system somewhere between the two systems and combine their advantages while minimising their disadvantages.

So, the distributed system of elements built into nodes, based on events and configured through a configuration software tool via links between the nodes, that make up the system presented here, consists of at least one node that includes at least one element with certain and specific features. This "at least one element" can be physical or virtual.

A virtual element is one that extends the functionalities of the node without having a physical reflection in the hardware, i.e., it is not a physical element as such. Therefore it does not have a one-to-one relationship with the hardware it manages, as is the case with physical elements.

So, for example, in the case of a physical element such as the switching element, every switching element is associated with a physical switch in the hardware, whereas this one-to-one matching does not exist for a virtual element.

Likewise, with a temperature sensor node, the physical element is associated with the physical sensor whilst the virtual elements of this sensor are the different temperature thresholds or ranges that occur, in such a way that each range or threshold is no more than a logical division, not specifically corresponding to the hardware. Another example could be the sound node, where every virtual element of this node consists of each of the sound channels it supports. In the case of an infra-red node that only has virtual elements, these consist of each of the IR codes that it supports, even when the hardware is no more than an LED infra-red emitter. So, it is not a physical element as such, and is not reflected in the hardware.

Each node in this system consists of a first hardware layer and a second software layer.

The hardware layer comprises a control unit, a physical element module and a communication module with the configuration software tool, whereas the software layer comprises a kernel, a driver for the physical elements, a driver for communicating with the configuration software tool, an operating system, a system library with all the information about it, an execution or runtime part, and the specification of the node that has to be registered. Different parts of the layers of each node are implemented depending on the type of node in question and its function

The elements in each node are related to elements in the same node or another nodes through links that determine where each order or event circulates. The functionality of each element is defined by at least one link and at least one configuration of the element that is translated into the system's language through a configuration software tool.

If there is more than one node, a communication protocol independent of the physical layer is established. The links represent the circulation of the events generated in the elements built into those nodes, establishing the flow for processing events.

The system is designed to provide the maximum scalability and versatility possible, giving it the ability to absorb any technology, present or future, and create an operating logic that allows for the configuration of any type of element that exists or that may be created in the future.

The system in this invention has the advantage that the functionality to be implemented does not depend on a specific element, but rather depends on a combination of the different elements that make up the system. The functionality is extremely easy to change and/or adapt to the needs that arise, simply adding or removing elements from the system. While the entire system is distributed, the system's configuration is centralised through a software tool which is responsible for dividing the configuration and saving it in the different elements, displaying all the information as if it were a centralised system.

The system operates on the basis of events, in such a way that once the desired functionality has been established through the software tool, and through a number of links between the different elements, the system only has to wait until the external events are produced. Once these events are produced, the system processes and resends them to the different nodes or devices configured, so that each node or device processes that event and, if required, creates new events that return to the system.

The communication protocol independent from the physical layer, which connects the different nodes built into the system, is one of the system's essential elements. With this virtual communication bus or protocol, which is not associated with any specific bus or network, a node can communicate with any other node regardless of the communication method used, giving it a scalability capacity at the level of communications between the system's elements. This represents a significant improvement compared to the current state of technology outlined and, therefore, is capable of resolving the technical problems discussed.

The system invented encapsulates any type of configuration of each of the elements in the system, both for existing elements and for potential future elements, in such a way that a control logic for these elements has been designed (configuration, events and processing of the events). Thanks to this control logic it is possible to create, configure and control any electronic device in a way that is completely independent of the hardware used. This logic is implemented in both the nodes that comprise the system and in the software tool that allows for its configuration.

More specifically, the system in this invention comprises the following main units: nodes, elements and connections or links. Each of these units is described below.

### 1- The nodes

The system is composed of at least one node. This is the minimum unit making up the system.

Each node has specific features that reflect the physical features of the physical element that the node in question controls. For example, the elements of a relay node are the relays and the sensor node has as many elements as it has sensors under its control.

The nodes consist of a first hardware layer and a second software layer, as previously discussed.

The first hardware layer normally consists of a control unit, a physical element module and a module for communication with the system's configuration tool.

The second software layer may consist of a kernel, a driver for physical elements, a driver for communicating with the configuration tool network, an operating system, a system library with all information about it, an execution or runtime part, and the specification of the node that has to be registered.

Depending on the type of node in question, its layers will consists of either all the parts mentioned or only some of them.

### 2- The elements

The elements are the system's minimum configurable unit, and as has been discussed earlier, they reflect the features of a physical or virtual element. At a logical level, the system only sees the elements, given that the nodes are really just acting as an interface to control these. So nodes may have physical or even virtual elements, given that their functionality is configured within the system through elements rather than nodes. The elements therefore provide the functionality required in the system as a whole, based on the connections available to them and the options configurable by the user.

The nodes are therefore hardware devices that the user or installer places in the facility. However, when it comes to configuring the system, the user/installer sees each of the elements connected to that node, since a single node may have various elements connected to it, of the same or different types.

To understand the operation of the elements and nodes, if we want to control a switch through a relay to turn the light on or off, the user first has to add a switching node (which may contain the elements switch1 and switch2) and a relay node (with the elements relay and relay2) to the system, configuring the system through the link between switch1 and relay1. With this simple configuration (performed in the software tool) the system is now configured so that every time an event is produced in switch1, a signal is sent to relay1 so that it can act upon it.

As discussed earlier, a fundamental feature of an element is the connections that support it, allowing for adjustments to the mode of operation. The more connections an element has, the more modes of operation it supports and as a result, the more connection types that can be created to or from other elements, considerably increasing the system's versatility.

In this distributed system of elements built into nodes, the links or connections between elements include modifiers of the order or event, which vary their value as desired, in a way that the event is produced at a certain moment depending on that value. The resulting order or event is destined to act upon one of the elements.

Similarly, these links between elements are performed through existing connection points in each element. These connection points can be input, output or input/output events.

For example, a switching element has a connection called "value" that is only output, because it transforms an external physical signal (press the switch) into a system event that "exits" through that link. The relay also has a "value" link but in this case it is an input, because it receives the event from the system (in our case coming from the switch) and transforms that event into an external physical signal (let the current through).

Taking the above example, switch1 is connected to relay1, and if there were only one way to connect them, the only thing that could be done is to reflect the value of switch1 in the value of relay1. In other words if we only have one connection, when switch1 is pressed, relay1 lets the current through.

However, if we want to use a button instead of a switch and ensure that each time we press the button the light changes state, i.e. the state of the light changes with each press of the button, this functionality cannot be implemented if we only have one "value" connection since when the user pressed the button it would send an event with the "on" value to the relay which would reflect this state, but once the user released the button it would send the event with the "off" value to the relay, therefore switching off the light, something that is not desirable in this case.

However, with more connections the elements built into the system can acquire more functionalities. In the example used, the desired functionality may be achieved by connecting the "on" connection, which is an output connection from the switches/buttons and only sends an event when it has been pressed but does not send an event when released (the opposite "off" connection exists), with the "toggle" connection of the relay that is an input connection for the relay that changes the state of the relay regardless of the input value.

Another concept to take into account is the options for the element. We are going to use the example of wanting to configure the light in a building's stairwell. In this case what is desired is that when someone pushes the button, the stairwell light comes on but then goes off after a certain time has passed.

For this particular example, connections alone are not enough because although the "switch on" part is easy to configure, there is no way of having a configurable "switch off" time. In this case, the configuration of connections is performed by connecting the output connection "on" from the button to the input connection "on" of the relay, which is a relay connection that activates the relay regardless of the event value.

With this we only ensure that whenever we press the button the relay switches on, but to ensure that the relay switches off after a certain time, in the relay element options we have to establish the desired switch off time in the "timer off" option, which is an option that all relays have so that if a time is established in seconds greater than zero, every time the relay is activated a timer is triggered which deactivates the relay when the established time arrives.

Thus, the elements are comprised of connections and options that as a whole provide the functionality of the system.

### 3- The links or connections

The links configure the virtual communications protocol and facilitate the high degree of adaptability of the system's features. The links are the representation of where the events generated in the elements through the nodes have to circulate i.e. they establish the flow of processing of the events indicating origin and destination.

The flow of processing of an event may be indefinitely extended. In the example used to explain the invention, an event is generated by an element, in this case a switch, built into a node, in this case a switching node and the event, through the configuration of the link, is sent to another element, in this case a relay in another node, the relay node. However, the flow does not have to end there because it can be indefinitely extended by adding more links to the output connections of the elements that receive the event.

If you want the television to be switched on when the living room light is switched on, the "value" output connection of the switch is connected/linked to the "value" input connection of the relay and then in the relay we have to connect the "value" output connection to the "tv on" input connection of the "TV" device, belonging to a TV node. From this example it can be seen that it is perfectly possible to combine more actions, and the system is also designed in such a way that there is no limit to the number of steps possible within a flow.

The links or connections, in addition to indicating the origin and destination of the event, have two special properties: time lag, also known as delay and value modifiers.

Time lag or delay is a property of the link that establishes whether you want to delay the event for a specific amount of time. The event in question, once generated, is not sent to the system until the time interval set by the user has passed.

The value modifier is the second property of the link, which means that values can be rejected, multiplied by any constant, or in general a logical or mathematical operation can be applied to the value of the event to modify it before it arrives at the destination. The value of the event therefore varies as desired so that the event occurs at a certain time depending on that value. This property is used more in elements like analogue sensors or similar, where their value is not 1 or 0.

An example of value modification as a property of the link is the case where you want to switch on a light at the moment when the exterior solar light lowers to 30%. In this case, a sensor node is used that has a light sensor element that contains a "value" connection giving a value between 0 when there is no light and 100 for the maximum light intensity and there is a relay node with a relay element.

In this case, if we connect the "value" connection of the light sensor element to the "value" connection of the relay what happens is that the light is always on, except when the sensor gives zero, which is when there is really no light. This is because when the sensor sends the value 0, that value arrives at the relay and it cuts the power. However, when the sensor detects some light, a value between 1 and 100 reaches the relay and since this is a digital element it always takes this as 1 and lets the power through.

If a reverse value modifier is applied to the link, we obtain the opposite feature, which is when the sensor is 0 the relay is activated and when it is higher than 0 the relay switches off. However this is still not the desired outcome because in the real world there is always some light, so our relay would always be switched on In this case it is more interesting to have it activated only when the 30% darkness threshold has been passed, i.e., we want it to switch on when the value is between 0 and 30. For this, in our value modifier we simply add the formula: event_value/30, and we obtain the desired functionality because if the value is below 30 the division is always zero, and when the value is 30 or higher the division is 1 or a higher value.

The system comprises a final abstraction which is the formation of groups, not located in any of the system's fundamental units but rather the information is divided and stored in small parts in each of the units described (nodes, elements and links). The groups allow us to establish conditional actions in the system, i.e., they allow us to establish conditional flows in the system.

Every link and element has some special properties which are the groups to which they belong, so every link has a group identifier and every element contains a list of the groups it supports, being the logical structure elements of the software, containing specific features that define that list of groups it supports. When we establish a flow, these connections can be "grouped" or assigned a group identifier so that they are only executed when that group has been activated.

Within the configuration program, by default, all links that we create that do not have a group are always executed, but in the cases where we only want to execute a link depending on a condition, this link is assigned to a certain group.

The configuration tool treats the groups as if they were an element, although they are special because they do not reside in any specific node.

The groups can be activated or deactivated by both links external to the group and links internal to the group.

The groups can be exclusive or cooperative. As discussed, links only have a group identifier, while elements have a list of active groups. So when the group activating event arrives at an element, if the group is exclusive, the group that arrives moves to the list of active groups and the other groups are deactivated, and any link/event that does not belong to that group is not processed. However if the group is cooperative, the element adds it to the list of active groups and processes all the links from those groups plus all of those without a group.

In the case of an exclusive group, when the elements receive the group deactivating event they activate the cooperative groups that were activated before receiving the activation order from the exclusive group. Even if the element has one exclusive group, the element continues being able to receive group activation/deactivation events in such a way that when the cooperative function is re-established, the list of active groups is always updated.

Finally, it must be mentioned that if an element is active in an exclusive group, it cannot move to another group, whether exclusive or not, until the order to deactivate the first exclusive group has arrived.

In general, and unlike the situation with the current technology, the nodes, which in the invention proposed here are implemented based on different hardware and software layers, allow for the inclusion of new communication protocols into the system through implementing a new layer capable of working with that protocol, leaving the rest of the node unmodified. This represents an Important simplification when it comes to incorporating new technologies into the system.

Communication between the nodes that implement different physical communication protocols is carried out through a bridge between physical protocols, whereas in the case of communication with other software communication systems or protocols, this is through a proxy.

So bridges between physical protocols are converters between different means of communication, i.e. translators at the hardware level between one means of communication and another, without processing any information, whereas proxies are translators between different systems and may contain a logic.

Moreover, since this is a system in which each element can act as a sensor, actuator, controller or interface depending on the need at the time, and it is conceived as the combination of modules with different functionalities that, depending on how they are arranged, fulfil different needs, it represents a solution to the problems discussed, lowering the costs of any control system compared to those currently available and offering the solution that is most in keeping with potential needs, with a versatility unseen to date.

In this distributed system of elements built into nodes, its configuration software tool comprises a programming application that can be used visually through the screen of a terminal, establishing the links between the elements and their configuration to obtain the desired functionality of the system.

In this way, no matter how complex the functionality you want to achieve, the configuration process is simple and intuitive. Additionally, this visual configuration does not generate code as the only thing it generates is a pseudo configuration that is later executed in the runtime of every node, eliminating the developing, testing and debugging time and costs associated with any current automated development.

The entire system configuration is updated in real time, i.e., when any link, option, etc. is modified the configuration tool saves that information in the node(s) affected and at that same moment you can check whether the configured functionality is the desired one or not.

The configuration tool in turn consists of the following sections or windows: scenarios, node list, element list and workspace.

The scenarios are an abstraction of what the user wants. So, a scenario can be each of the areas in a room in order to organise the elements in it, or it can be each of the specific functionalities that you want to control such as the TV, lighting, heating, etc. The scenario simply contains the elements of the system and represents its links, and as many can be created as are necessary. The scenario, or the concept of the scenario, is an organisational concept in the configuration tool, in fact, the division of scenarios resides in the application/tool itself and not in the system.

In the node list, all nodes existing in the system are represented regardless of the communication method or protocol used through the proxies, translators and bridges in the system.

The nodes represented here, as we have said before, are all the devices that the installer/user adds to the system. In this window, if a node has stopped working it appears in red indicating that it has a fault The configuration tool, even if the node does not respond, knows that it has existed at some point because it leaves a trail of links from other nodes that indicates this, or alternatively the node itself reports internal faults. This window is updated in real time, i.e., if the configuration tool is open and a new node is added to the system at that time, this window updates the list immediately reflecting the new node added.

In the element list we can see all elements belonging to the selected node. The element list is where the element that you want to work with can be selected and "dragged" into the workspace or element space in order to have a visual representation of it, with its connections and links. This window is of special interest because here the types of virtual elements supporting the node can be added. When a node exports its configuration to the configuration tool, in addition to indicating what elements it contains it also exports the types of virtual elements. For example, a sensor node, besides exporting the physical elements such as the temperature or light sensor, will export that it supports two types of virtual element, the virtual element of the light range and that for the temperature range. These virtual elements extend the functionalities of the sensor node, i.e., they extend its capacities, so in this particular case for example, these virtual elements may have ranges or values so that when any of them are transferred, the virtual element creates an event Physical or virtual elements can be added, but only virtual elements can be removed. Physical elements cannot be removed.

Finally, the workspace is the most important part of the program. This is where the links between the different elements are established, where the options for the elements are configured and in general where we can see the flow of links/events to achieve the functionality required. The workspace is a map of the system where you can work.

Every element is represented as a symbol, picture, etc. with its name. The user may give any name to a node as this can help to provide greater understanding of what they are using, for example "kitchen light". Every node can also be renamed and the connections or connection points it contains changed. Normally the configuration tool assigns a colour to each type of element, which is common to all elements of the same type, for easier identification, although obviously the colours can be changed, both in terms of type as well as for the individual element. The colour is also a property that only affects the tool and has nothing to do with the system. Within the workspace, to be able to better visualise the functionality or flow that you want to create, the elements can be moved freely and clicking on each element opens the options window so that they can be configured. There is no minimum or maximum size for the map. However, the bigger it is, the more you have to scroll in order to see the flow of all the elements. It is more convenient to have smaller flows organised into scenarios.

The element options are very specific to each element, so the developer of the node, apart from creating the code for the specific node, can also, if they want, have element options, needing to create the corresponding plug-in so that the tool can interpret these options. If the configuration tool does not have the plug-in corresponding to the element, it simply displays a warning that the plug-in is missing, but it treats the element as if it had no options.

To add links you have to click on the connection in question for the source element and connect it to the connection for the destination element. Once this action has been performed, the tool, as we have commented previously, connects to the affected nodes sending them the new configuration, in such a way that it is possible to test at that very moment if we have created the desired functionality. If we want to modify the properties of a link, such as the delay or value modifier of an event, it is likewise performed from this point. The links that have properties are displayed in a different colour to those that do not have established properties, in order to help the user identify which ones have options and which ones do not.

Additionally, if the system comprises a certain number of nodes, but it becomes necessary to introduce a new node that did not initially exist in the system, this can be performed simply and without any problems

Thanks to the software layer in all the nodes, specifically Runtime, once the new node is connected to the system this layer is responsible for notifying that this new node exists so that the other nodes are made aware of its existence, as is the configuration tool so that it can configure it. This layer uses different software techniques to automatically detect nodes, depending on the actual bus to which it is connected, with ZeroConf being the most common.

Once the new node is detected, the configuration software tool is responsible for translating the specifications of the node into the logic of the system using the Runtime in the node's software layer, in this way being able to configure the node so that the system can use it.

The specification of the node is the code that has to be implemented in a node to be able to define the parameters and properties it contains so that they can be used in the system, as well as the elements it comprises, the connections of each one and the options of each element.

This code is implemented by the developer interested in creating a new node and they do it with the existing electronic development tools on the market plus an API or software library for the system, which provides and includes each and every one of the layers necessary, including Runtime, so that the node operates correctly in the system, just leaving the developer with the task of implementing the node's specification.

In this report we outline, in addition to the distributed system of elements built into nodes, based on events, an operating procedure for a distributed system as defined. This procedure has a first part consisting of the receipt and sending of events for the registration and configuration of each node from the configuration tool and a second part consisting of a series of phases.

The first of these phases is the activation of the sending of "at least one event" to "at least one first node".

Next we have the reception in "at least one second node" of "at least one event" coming from the first node.

Following that, the "at least one second node" receiving the information processes it.

Once the information has been processed, we have the generation of the receipt of the "at least one event" in the "at least one element" built into the second node, which receives it.

Next is the execution of this information by these elements.

The next phase of the procedure comprises checking the "at least one element" built into the second node to see if, according to its configuration, a new event should be generated or not.

Finally, and depending on the configuration of that "at least one element" built into the second node, if this is configured to generate a new event, this event is sent to the corresponding node.

A significant improvement on the current technology is obtained with both the distributed system of elements built into one or more nodes and with the operating procedure proposed here.

This is because the result is a system that is capable of controlling the existing technology systems and configure all of them in the same way, i.e. it creates compatibility between systems where none currently exists or where trying to make them compatible requires customised and costly development. This not only includes domotic systems but also agricultural ones, in addition to logical processes such as facial recognition, industrial control, etc.

This system is also sufficiently versatile and scalable to be able to absorb both current and future systems.

This system, since it is designed to be able to control any type of different system, does not depend on a unique communication protocol and therefore supports any type of communication infrastructure in existence or that may be created in the future, without having to perform different configurations.

In turn, the system does not depend on central units, i.e., the entire system is distributed so that it is fault tolerant and so, in this way, a damaged part only presents information that affects it, not compromising the stability or operation of the rest of the system.

Additionally, although the entire system is distributed, it can be easily configured from a single location without it being necessary to configure every element one-by-one.

Moreover, despite the numerous different systems that the proposed distributed system can include, thanks to the use of the appropriate proxy nodes, responsible for converting and abstracting the peculiarities of each system to the distributed system's operating logic, there is a single configuration approach to each and every one of the elements using those systems, regardless of their origin.

In turn, this system and its procedures offer the added advantage that the configuration or programming of that system, however complex, can be performed visually and by people who are not necessarily qualified as developers or with that level of expertise.

In this way, a completely different system to those already in existence is achieved through the distributed system of elements built into nodes presented here. This is because its function, more than simply controlling devices, is to solve real practical problems. It can create solutions in any type of system in existence and in those that have yet to be created, including those for domotics, autonomy, etc., distributed or not, that involve using one or more different protocols. All of this is done without the need to individually program every device or system, or the translators between them.

So a distributed system is obtained that, through simple and visual programming, is capable of configuring any system that you want to add to an existing one. In this way, with this system the configuration is performed in a computerised way, eliminating the need to manually configure every device built into it. This considerably reduces the difficulty of the configuration process, the possible errors that can arise from manually performing this process, the time invested in it and therefore the costs arising from that configuration.

Throughout the description and the claims, references to "consist of" and its variants are not intended to exclude other technical features, additions, components or steps. For experts in the matter, other purposes, advantages and features of the invention will emerge partly from the description and partly from the practical implementation of the invention. The following examples and drawings are provided by way of illustration and are not intended to restrict this invention. This invention also covers all the possible combinations of particular and preferred uses discussed.

### Brief description of the drawings

To help achieve a better understanding of the invention's features a series of drawings are provided as an integral part of a practical example for which at least the following has been represented:
Figure 1.- Shows the physical layout of the nodes in the system, available in the studio-type flat used for the example.
Figure 2.- Shows a schematic view of the layers of a node as implemented in the system in the invention.
Figure 3.- Shows a schematic diagram of the configuration of links between the system's devices to control the lighting in the kitchen.
Figure 4.- Shows a schematic diagram of the configuration of links for another scenario in which the blinds and light in the bedroom are controlled.
Figure 5.- Shows a schematic diagram of another configuration of links for a scenario of controlling the bathtub and bathroom light.
Figures 6.1, 6.2, 6.3 and 6.4.- Show schematic diagrams of other configurations for the blind, light, TV and A/C devices in the living room.
Figures 7.1 and 7.2.- Show a schematic diagram of another configuration of links for the devices in the entrance hall of the house, such as the presence detector and video intercom.
Figure 8.- Shows a schematic diagram of another configuration for a scenario that does not follow the logic of the location of the devices in a single room, in this case for the scenario of switching off the house.
Figure 9.- Shows a schematic implementation of a relay node that forms part of the distributed system in the preferred use of the invention.
Figure 10.- Shows a schematic implementation of a software node, specifically a facial recognition node.
Figure 11.- Shows a schematic implementation of a proxy node, specifically a mobile node.
Figure 12.- Shows a block diagram that represents the operating procedure of the distributed system of elements.

### Detailed description of a preferred use of the Invention

From the diagrams provided, it can be seen that in the preferred use of the invention, the distributed system of elements (1) built into nodes (2), based on events and configured through a configuration software tool via links (3) between nodes (2) that make up the system proposed here, comprises various nodes (2) that each contain a series of elements (1), which may be physical or virtual and have certain specific features.

The virtual elements are those that reflect a type of logical configuration of the system. If, for example, there is a physical element such as a sensor, a virtual element may be the one that reflects the values of that sensor. So, whilst the physical sensor element itself is reflected in the hardware, the same does not occur with the virtual element.

Every node (2) consists of a first hardware layer and a second software layer.

The hardware layer comprises a control unit, a physical element module + and a module for communication with the configuration software tool, whereas the software layer comprises different parts, formed by a kernel, a driver for the physical elements, a driver for communicating with the configuration software tool, an operating system, a system library with all information about it, an execution or runtime part, and the specification of the node that has to be registered. The parts necessary for each of these two layers are implemented in each type of node according to its function. The elements of each node are related to its elements or those of another different nodes through links that mark the flow direction of the orders or events produced in the system. So, the functionality of each element is defined through the links (3) with the other elements and at least one configuration of element (1) that is translated into the system's language through a configuration software tool.

The preferred use of the invention presented in this report, to create a better understanding of the invention, is a distributed system of all the nodes (2) in a flat (4) (studio type) that consists of entrance hall R, living room X, bedroom U, bathroom W and kitchen T, configuring an installation to manage these that is simple to install and offers a wide range of possibilities.

Proposing this preferred use of the invention, so that it can be understood better, does not mean that this distributed system is only applicable to domotic applications. It is therefore not a limiting example, since this system can be applied to measurement systems, industrial systems, public service networks, traffic networks, etc., or in other words, to any application that comprises electronically controllable elements and deals with their management.

The elements to be controlled are the following, indicating their location within the house: five lights, one located in each room; three motorised blinds, two located in living room X and one in bedroom U; switching on and off of an air-conditioning unit and television unit through the TV remote in living room X: level and temperature of water in the bathtub and opening/closing of the tap, both in bathroom W: a video intercom in entrance hall R; a bell and an exterior camera for the video intercom, and outside the flat; an electronic lock on the front door; a domestic alarm type presence detector in entrance hall R; three double buttons (raise and lower) to control the blinds and five singe buttons to control each of the lights.

The system is implemented through a configuration software tool and the software is implemented in the nodes (2) that comprise the system from a physical point of view (hardware). A fundamental feature of the system's implementation is that it is completely independent of the platform where it is implemented.

For the operation of the distributed system with this preferred use of the invention, it is necessary to install a wireless router with an ADSL connection which is situated in entrance hall R, as well as a proxy that allows communication from the independent communication protocol RS-485 to Ethernet, connected to the router, also situated in entrance hall R. The ADSL connection is only necessary in cases such as this preferred use of the invention in which remote access to the control of the house is desired, but it would not be necessary in cases where that condition was not required.

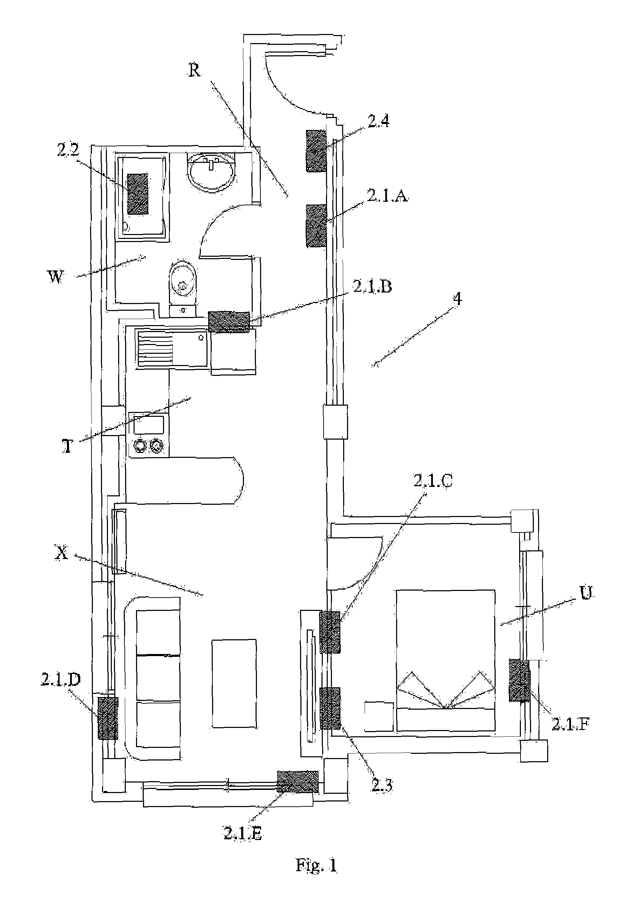

In this system, four types of different nodes (2) are used, whose layout in studio (4) is represented in Figure 1. All of them have the same structure.

In order for the system to be scalable, any node (2) must be divided into layers, which depend on its functionalities. This is because a node (2) can be connected to any electronic device, from a micro-controller to a server. So, it will have one or more layers depending on its capacities.

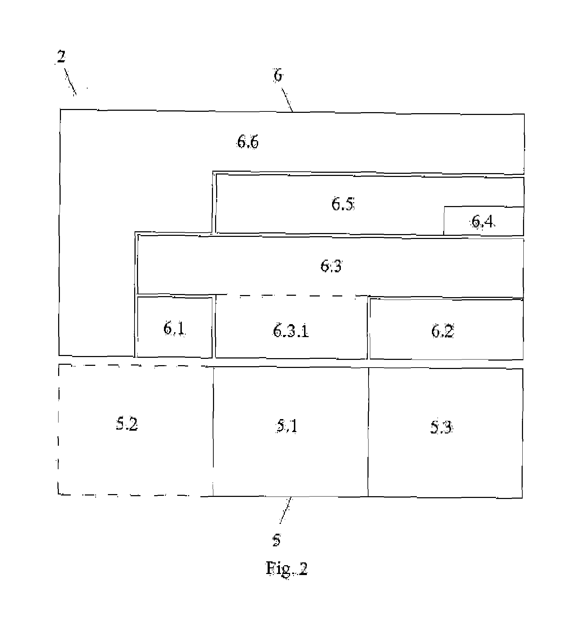

Figure 2 shows an outline of the layers that form the nodes in the distributed system of this invention. These are the following:
1- Hardware layers (5): control unit (5.1), physical element module (5.2) and communications module (5.3).
2- Software layers (6): driver for physical elements (6.1), driver for communications (6.2) with the network, operating system (6.3), core of the operating system or kernel (6.3.1), libraries (6.4) of the system, runtime (6.5) and specification (66) of the node 2.

The four types of different nodes (2) used in this preferred use of the invention have the same structure at the hardware level that consists of a communication module (5.3), control unit (5.1) and element module (5.2). In these nodes, a different module has been used in each of the parts of that structure, one that is suitable for the role it has in controlling the studio flat. So, these nodes (2) are the following:
The first node is the double relay (2.1) which consists of an element module (5.2) composed of 2 relays, 6 switches and an optional sensor module.

It communicates with the rest of the system through an RS-485 type communication protocol. These nodes (2.1) allow the control of switch on/switch off elements such as lights or motors for a blind. In many cases it is not necessary to use all the switches and those that are not required remain unused.

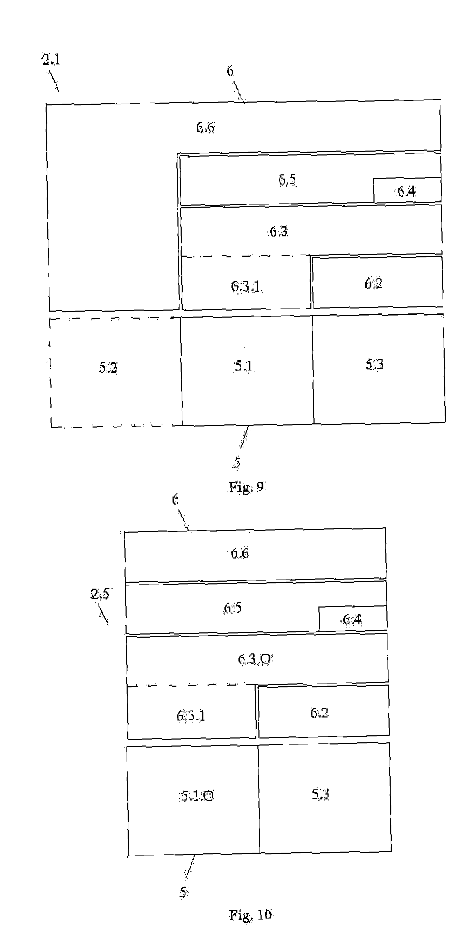

Figure 9 shows an outline of the layers that form a double relay node (2.1) in this preferred use of the invention.

This shows two physical relays connected to that node (2.1) and it communicates with other nodes in the system through an RS485 type communication protocol. This node (2.1), separating it into layers (5) and (6), as previously discussed, consists of:
1- Hardware layers (5): a control unit (5.1) comprising a PIC24 16 bit micro-controller, a physical element module (5.2) formed by two relays and six switches and, a communication module (5.3) comprising an RS485 communication protocol.
2- Software levels (6): a driver for communication (6.2) with the network, of an ExOS RS485 type driver, an ExOS operating system (6.3), libraries (6.4) for the system implemented by default that contain all the system's information, a runtime (6.5) and the specification (6.6) of the node (2.1) defined by the user when implementing the node in the system, which implies the specification for double relay (2.1). With this preferred use of the invention, the driver (6.1) for physical elements is not applicable, since access is direct.

The ExOS operating system (6.3) is a free access operating system for micro-controllers with a POSIX compatible abstraction layer, which is designed together with the distributed system presented here to establish the same relationship between layers (5) and (6) of the distributed system, both if node (2) is a small micro-controller or if node (2) resides in a desktop computer.

The second node is the double solenoid valve (2.2) that is formed by a physical element module (5.2) comprising two solenoid valves, six switches and an optional sensor module.

It communicates with the rest of the system through a communication module (5.3) comprising an RS-485 type communication protocol. It can control the opening and closing of the taps on a bathtub. Incorporating a temperature and level sensor means that it can also control the water temperature at any time and the filling/emptying of the bathtub.

The third node is the Infra-red (2.3) node that consists of a physical element module (5.2) comprising a transmitter and receiver

It communicates with the rest of the system through a communication module (5.3) comprising an RS-485 type communication protocol. This node (2.3) can control the devices in flat (4) that respond to infra-red signals, which in this example are the television and the air-conditioning, both located in living room X.

The fourth type of node is the video intercom (2.4) that consists of a physical element module (5.2) comprising the video intercom itself, which has a camera.

It communicates with the rest of the system through a communication module (5.3) comprising an Ethernet type communication protocol.

A special case is that of the virtual nodes. A virtual element is one that reflects a type of logical system configuration, i.e., unlike with a physical node such as a relay node, where the relationship is one-to-one and the relay element appearing in the system is associated with the hardware relay contained in relay node (2.1), in the case of the virtual node, hardware can exist that reflects the different states of that hardware, for example sensors.

Although there are no sensor nodes in this preferred use of the invention, an example of a sensor node could In fact contain more than one sensor, for example an ambient light sensor and another for temperature, or even a single light sensor.

For example, the node could have a physical element such as a light sensor, which through its "value" output connection sends information on the sensor's current value. However it can also have some virtual elements such as "sensor ranges". A "sensor range" type element has two output connections, "in" and "out", and two element options that are "min. value" and "max, value" so that if the user has configured the minimum and maximum value in the options for that element, when the node internally detects that the value of the sensor is within any of the ranges established in each of the virtual "sensor range" elements, the corresponding connections generate an event.

This is useful if you want, for example, to turn on a bulb as long as the light is within a certain range, for example between the values 30 and 60. This configuration would not be possible in the above example using only the physical sensor element. However, using the virtual elements the configuration is now possible. You just have to create, in the configuration program, a new "sensor range" type element within the node and the new element automatically appears in the system. Once visible in the system, the range options can be configured and linked to other elements that you want them to interact with.

In the case of sensor nodes, layers (5) and (6) are the same as those in relay node (2.1) as they contain the same control unit (5.1) and the same communication module (5.3) comprising an RS485 communication protocol. The only differences are the sensors, so the specific hardware or physical element module (5.2), and the implementation of the specification (6.6) of these.

In the case of an audio node, layers (5) and (6) are similar, only differing in the communications protocol because the audio node, on requiring more bandwidth, communicates through TCP/IP. There is a type of node that can reflect software (software node). In principle this is not possible because each node (2) needs to be executed in certain hardware. However, when we refer to software node (2.5) we are talking about a node (2) that is executed as a service and/or application on a desktop computer or server This special version of node (2) does not have any of the hardware layers (5) or any layers that refer to the operating system (6.3), because it uses the hardware and Operating System 6.3.O (mac, linux, windows) installed on the computer and its micro-processor 5.1.O. One example of this is a facial recognition node, which due to the requirements for processing facial features being very high, uses computers to be able to obtain that processing capacity. So, the facial recognition node is an application that contains only the library (6.4) of the system and the runtime (6.5) to be able to export or publish the functionalities offered by that computer into the system. The diagram of the layers of a software node (2.5) is shown in figure 10.

Finally, it should be noted that each node (2), regardless of its nature, uses runtime (6.5) in order to send/receive events and system configurations, which in turn contains the software necessary for controlling the hardware and the system's core (libraries (6.4) of the system).

Within the system, and due to the system being highly scalable and configurable, there are a large number of ways to implement a node (2). The "normal" nodes (2) are those that have a specific function such as the double relay (2.1), sensor node, etc. However, there are cases where the node (2) represents a set of elements (1) that, regardless of whether or not they are virtual, must be synchronised with other "electronic devices" that do not understand or know anything about the system

These nodes are known as proxies and are nodes that on the one hand communicate with the invention's system and on the other communicate with another system unrelated to it. These proxies are a type of translator between different systems.

An example of this type of node is found in a mobile node (2.6) that is a node that acts as a proxy in the system, reflecting the configuration of system in each of the mobile elements (1) to which they can be linked. The mobile node is specifically designed to give support to all the "devices" that are mobile, i.e., that do not have a continued presence in the system. These "devices" can be mobile phones, laptops, pdas, etc. and due to their limited time in the system, these elements are connected to the corresponding proxy (mobile node) for both receiving updates about the events that have been produced in the system and for generating new events that the user requires (such as switching on a light using a mobile phone).

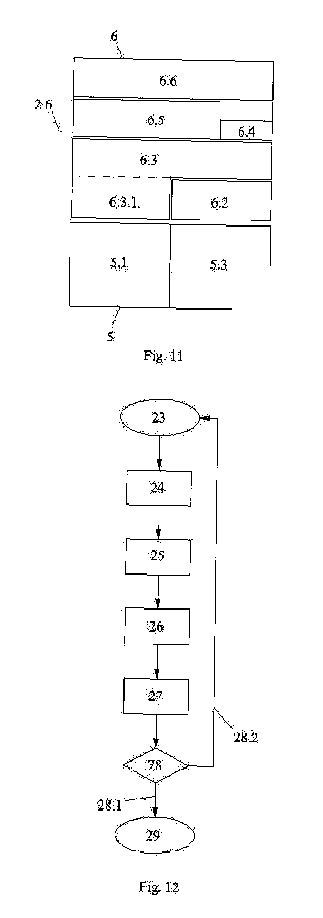

This proxy node is the permanent element of the system that allows for the connection of elements (1) that are not permanently in the system. With this node in particular, although the communication system (5.3) with the system is Ethernet, the communication between the mobile "devices" is also carried out through Ethernet, sharing the same communications driver (6.2). The diagram of layers for the mobile node (2.6) is shown in figure 11, although in this case one has to take into account that it is a mobile proxy node, whereas in other examples it could be wi-fi, Bluetooth or any other similar standard.

Another important example of a proxy node is the proxy nodes translating other systems. For example, in some installations, when installing the system in the invention, there will probably be another existing system installed by another manufacturer. In this case, and to avoid changing systems which would be expensive since it would involve removing one system and replacing it with the system in the invention, so-called "proxy" translators are used in order to be able to take advantage of the previous installation. Due to the base or core of the system being a purely logical abstraction, translating one configuration of our system into another or vice versa is a relatively simple process, so the elements from other systems can be absorbed within the system by using or creating the appropriate translator. An example of using this proxy node is translating another system such as KNX, which is a domotic system for the smart management of houses and buildings.

In the case of both the mobile node and the translator node, the specification (6.6) of the node is responsible for communicating with the "other" system network, in order to control and translate the information bi-directionally between the two systems. There is a very specific case that only occurs in the elements of the invention's system, which is the case of the bridges.

There are a large number of nodes (2) for most of the functions required nowadays in the industry of automation, measurement, etc. However, many of these nodes (2) do not communicate using the same system, some communicate by Ethernet, others by RS485, others by Zigbee, others by Bluetooth, etc.

Due to the concept of the communication protocol, defined by links (3), any of these nodes (2) can communicate with any other node (2) because they understand each other and know the logic of the invention's system. However, in practice they cannot really do this because their communication systems are different. In these cases bridges are installed, which are nothing more than converters between different communication protocols. So, for example, if we want to communicate with a node with an RS485 communication protocol, or with a node with an Ethernet communication protocol, we will install an RS485/Ethernet type bridge in the middle.

A bridge must not be confused with a translator or proxy The bridge simply translates at the hardware level between one communication method and another and does not process any information, whereas the proxies or translators may contain logic, which in some cases can be complex, although on occasions they may seem to act like bridges.

Described below are the different nodes (2) existing in the installation shown in Figure 1:
Video Intercom Node (2.4): This is responsible for controlling the video Intercom. Its role in the installation configured in this preferred use of the invention is to detect when someone rings the bell and activate the video camera in response to this event. Next, it executes a facial recognition program, connects to different mobile devices (telephones, iPads, televisions, etc.) located in the local network or through the internet before sending the recognition images and information, Finally it receives the order from the mobile device to open the door and executes it. Its communications module (5.3) enables it to connect to the router through the Ethernet protocol and, through the proxy, to communicate with the other nodes (2) through the RS-485 protocol

First Double Relay node 2.1.A: This is responsible for controlling the light in entrance hall R and opening and closing the lock on the front door. It comprises a relay (8.1R) to control the light in the entrance hall, another relay (8.3) for the lock on the door, and it receives a signal from a presence detector (10.8) which switches on the light when somebody passes in front of it It also has a switch for "turning off the house" (10.4) (the user indicates that they are going to leave the house and, communicating with the other nodes (2), all the elements (1) controlled by the installation are switched off or put on standby. For example, the blinds are closed, the lights are switched off, the air-conditioning is turned off, etc.)

Second Double Relay node 2.1.B: This is responsible for controlling the switching on and off of the lights in kitchen T and bathroom W. It also has switches (10.5) for those lights and a switch (10.6) that can operate the solenoid valve that controls the tap on the bathtub.

Third Double Relay node 2.1.C: This is responsible for controlling the switching on and off of the lights in bedroom U and living room X. It also has switches (10.5) for those lights.

Fourth Double Relay node 2.1.D: This is responsible for controlling the opening and closing of the blind on the side window in living room X. It also has switches (10.7) for manually controlling that blind, one to raise it (10.7S) and another to lower it (10.7B),

Fifth Double Relay node 2.1.E: This is responsible for controlling the opening and closing of the blind on the front window in living room X. It also has switches (10.7) for manually controlling that blind, one to raise it (10.7S) and another to lower it (10.7B).

Sixth Double Relay node 2.1.F: This is responsible for controlling the opening and closing of the blind in bedroom U. It also has switches (10.7) for manually controlling that blind, one to raise it (10.7S) and another to lower it (10.7B).

Double Solenoid Valve Node 2.2: This is responsible for filling the bathtub. It has valves (11) for opening/closing the hot and cold water, temperature sensors (12.1) and level sensor (12.2). It has switches to begin filling the bathtub or stop it (10.1), raise or lower the temperature of the water (10.2) and raise or lower the filling level (10.3).

This node (2.2) incorporates in its hardware, in the element module (5.2), the aforementioned temperature sensor (12), whereas the control unit (5.1) is composed of a 16 bit PIC24 micro-processor.

Communication with the other nodes (2) is established through an RS-485 protocol. In its hardware part, there is a reflection of the fact that the sensor (12) does not need to process information through the control unit (5.1) because it is limited to only producing a value depending on the measured temperature of the water, without needing to process this, so a driver (6.1) is not implemented in the column of the physical elements module in contact with the operating system (6.3). The operating system (6.3) chosen for this node (2.2) would be ExOS, suitable for micro-controllers, and this operating system (6 3) is supported in the upper layers of Runtime (6.5) and the specifications (6.6) of the sensor node to operate in accordance with the system requirements

It must be highlighted that this node (2.2), apart from the temperature sensor element (12) that continuously offers the value of the temperature, has virtual elements for the temperature ranges, which create an event when an established temperature limit is crossed, always treating all of these elements in the same way.

Infra-red node (2.3): This is available next to the television and in an area where it is also capable of reaching the air-conditioning unit. It controls the switching on and off of both devices using infra-red signals. Although not considered in this preferred use of the invention, it is also possible to control all the other functions of each device, such as the volume of the television or changing the channel.

In the distributed system of elements (1) built into nodes (2) of this preferred use of the invention, the links (3) or connections between elements (1) include signal modifiers, modifying these as desired. In turn, these links (3) between elements (1) are made using existing connection points in each element that can be input, output or input/output of events.

The computer application, where different links (3) between nodes (2) are established in such a way that the flow of events is produced through them, allows this to be carried out through different arrangements of those links (3) which we call scenarios. These scenarios can be put into groups which can be activated or deactivated in such a way that it is not necessary to establish all the links (3) every time an operating mode is desired. Instead they are stored in the groups and you just have to select a particular group in order to obtain the programmed functionalities.

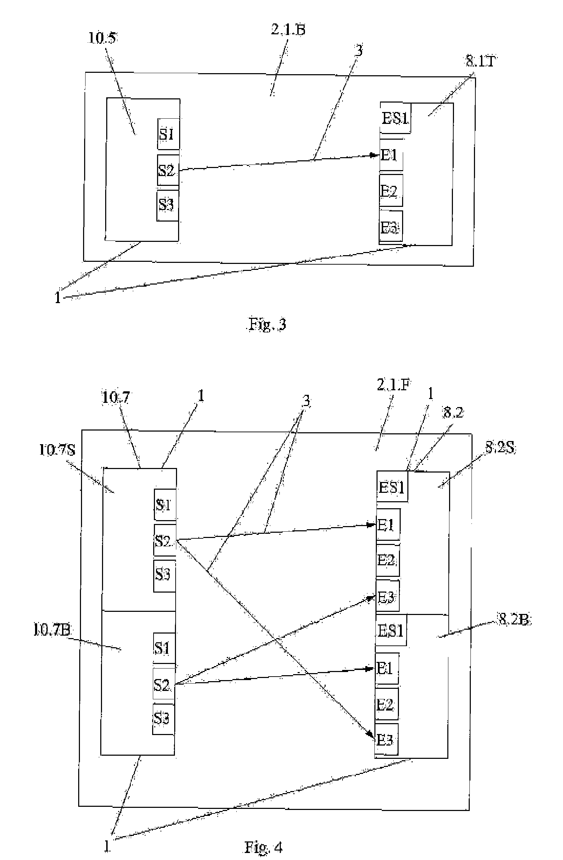

Presented below are a series of scenarios established in this preferred use of the invention, developing the arrangement of the aforementioned links (3) in each of the scenarios depending on the connections in each of the nodes:
Scenario 1 (Kitchen light T): A first scenario of the simpler type, which can be seen in Figure 3 and which consists of controlling the kitchen light through a switch (10.5). In Figure 3 the double relay node 2.1.B is represented, along with the elements involved in this scenario, although it comprises more elements which in this case are not represented.

We find on the wall a press-button type switch (10.5) where the switch returns to its initial position after being pressed. There is also a relay (8.1T) that allows or prevents the current passing through towards the light in kitchen T. At a system level we have a switching element (10.5) with three output connections, "Value" (S1), "On" (S2) and "Off" (S3) which are named according to the events coming out of them, and a relay element (8.1T) that has an input and output connection which is the "Value" (ES1) and three input connections which are "On" (E2), "Off" (E3) and "Toggle" (E1), and all of these elements (1) being found in the double relay node 2.1.B.

The "Value" connection deals with events which provide the system with any numeric value that it can work with. This is the case, as in this preferred use of the invention, where there is, for example, a potentiometer that allows for the regulation of the intensity of the light. While the "On" and "Off" connections only emit as an event the fact that the on/off switch has been pressed, the "Toggle" connection toggles, i.e., on receiving an event, if the relay is open it closes it and if it is closed it opens it.

So, to operate the light in kitchen T it is only necessary to link the "On" connection (S2) from the output switch (10.5) with the "Toggle" connection (E1) of the input of relay (8.1T), so that every time the system detects that the switch (10.5) has been pressed, it alternately switches the light on and off.

As part of the arrangement created for this scenario 1, a link modifier can be used if so desired, adding a delay so that the system can be configured in such a way that when the switch is pressed the light comes on but later switches off automatically after a certain amount of time.

Scenario 2 (Bedroom blind U): This scenario is shown in Figure 4 and corresponds to the configuration of links (3) to operate the blind in bedroom U, where the double relay node (2.1.F) is located. At a physical level we have a switch (10.7) for operating the blind, located on the wall with a button to raise it (10.7S) and another to lower it (107B) and the current flowing to the motor of the blind is controlled with a pair of relays (8.2) that open and close according to the order given.

It therefore has four elements (1) which are the raising switch (10.7S), the lowering switch (10.7B), the raising relay (8.2S) and the lowering relay (8.2B). The switches (10.7S and 10.7B) have three output connections each, "Value" (S1), "On" (S2) and "Off" (S3). Given that at a physical level we only have one raising button and one lowering button, the only connections used in the switches (10.7S and 10.7B) are the "On" (S2) in each switch.

In the relays (8.2S and 8.2B) we have an input and output connection which is "Value" (ES1) and three input connections which are "On" (E2), "Off" (E3) (when they receive an event, they open or close the flow of the current) and "Toggle" (E1) (when it receives an event it opens to let the current pass if it was closed and closes it if it was open).

So, one way of operating the blind consists of linking the output connection "On" (S2) of each of the switches (10.7S and 10.7B) to the input connection "Toggle" (E1) of the relays (8.2S and 8.2B), so that when the raising switch (10.7S) is pressed, the raising relay (8.2S) lets the current through and the motor starts to raise the blind. To stop the motor, simply press the raising button again and it stops. To avoid both relays (8.2S and 8.2B) simultaneously letting the current through, the output connection "On" (S2) of each switch (10.7S and 10.7B) is also linked with the input connection "Off" (E3) of each relay (8.2S and 8.2B), so that when we push the raising (10.7S) or lowering (10.7B) switch, the relay for the opposite movement stops the current.

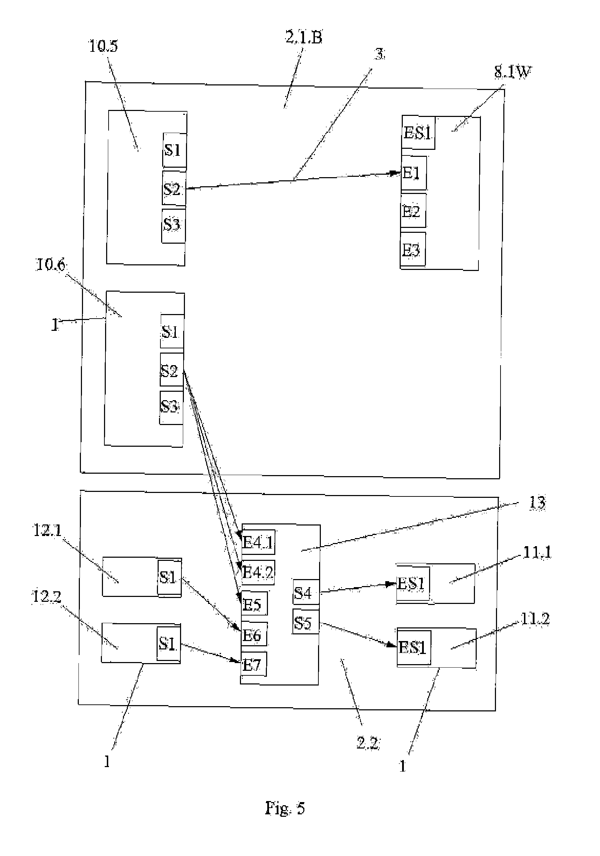

Scenario 3 (Bathroom): This scenario, which is shown in Figure 5, involves the configuration of both the lights in bathroom W and the temperature control and filling of the bathtub. In Figure 5, the solenoid valve node (2.2) and the double relay node (2.1.B) are shown with the elements involved in this scenario, although node (2.1.B) comprises more elements, such as those from scenario 1, which in this case are not represented.

We have a switching element (10.5) associated with the light switch located on the bathroom wall, a switch (10.6) that controls the operation of the bathtub so that when pressed the bathtub starts to fill with water at a pre-selected temperature, and associated in the same way as above with a switch on the bathroom wall, a temperature sensor (12.1) and another for the level of water (12.2), associated with the actual sensors located in the bathtub and, finally, three solenoid valves (cold water, hot water and drain) associated with their corresponding elements in the system, with the peculiarity that the draining solenoid valve is incorporated into a control element (13) for the bathtub.

It can be seen in Figure 5 that the control of the light in bathroom W is performed identically to the method seen in scenario 1.

To control the bathtub we have the following elements that transmit events: A switch (10.6) for the bathtub with output connections "Value" (S1), "On" (S2) and "Off" (S3), a temperature sensor (12.1) with a single output connection "Value" (S1), which indicates the value of temperature obtained with every measurement, and a filling sensor (12.2) with a single output connection "Value" (S1), which indicates the level of existing water with every measurement.

These elements send events to the control element of the bathtub (13), which has four input connections: an input connection for opening/closing the draining solenoid valve (E4.1 and E4.2), an input connection for the desired temperature (E5), one for current temperature (E6) and one for filling level (E7). As this control element (13) receives the events, it processes them in accordance with the specifications set by the user, and from two output connections "Cold water level" (S4) and "Hot water level" (S5) it sends events that are collected in the connections "Value" (ES1) of the Cold water solenoid valve (11.1) and Hot water solenoid valve (11.2) elements.

In this way, on pressing the button on the bathtub, the switching element sends this event from its "On" connection to the "fill/empty" control element connections, which control the draining solenoid valve and the "Desired temperature" which in this preferred use of the invention has been pre-set at 36°. The temperature sensor element and the bathtub filling sensor element constantly send events that indicate the value of both parameters to the corresponding "Current temperature" and "Filling level" control element connections. Finally, from the output connections of the control element, events are sent to the cold water (11.1) and hot water (11.2) solenoid valves with the degree of openness that they should have at all times, depending on the data received by the sensors.

When you want to empty the bathtub, pushing the switch on the bathtub again opens the draining solenoid valve, ignoring all other signals and sending the off signal to the hot and cold water solenoid valves.

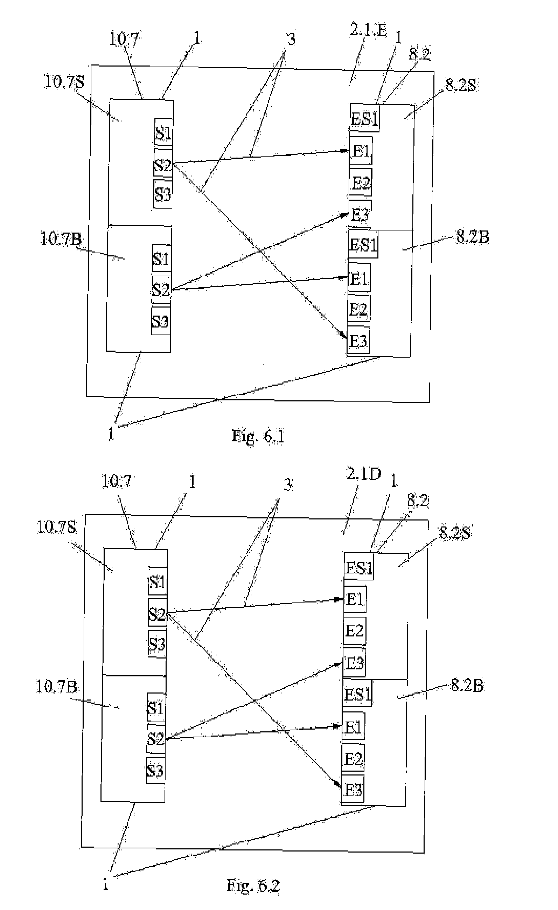

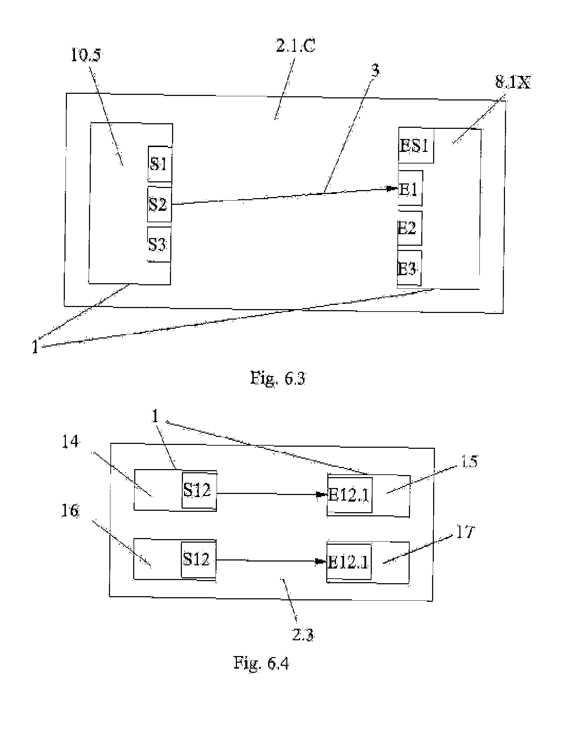

Scenario 4 (Living Room): Through this scenario, which is shown in Figures 6.1, 6.2, 6.3 and 6.4, the blinds on both windows, the living room light and the switching on and off of the air-conditioning are controlled. Both the control of the light, as can be seen in Figure 6.3, and that of both blinds, shown in Figures 6.1 and 6.2, are configured similarly to the previous scenarios. However, as shown in Figure 6.4 for controlling the air-conditioning, as is the case when controlling the television, an element called the green button (14) on the remote control is available through the infra-red node (2.3), with a single output connection "Pulse" (S12) which sends the event (3) that the A/C switching off element (15) has been pressed, which has a single input connection (E12.1) that switches off the device when it receives the event. For switching on, the element called the red button (16) on the remote is used, which is linked to the A/C switching on element (17).

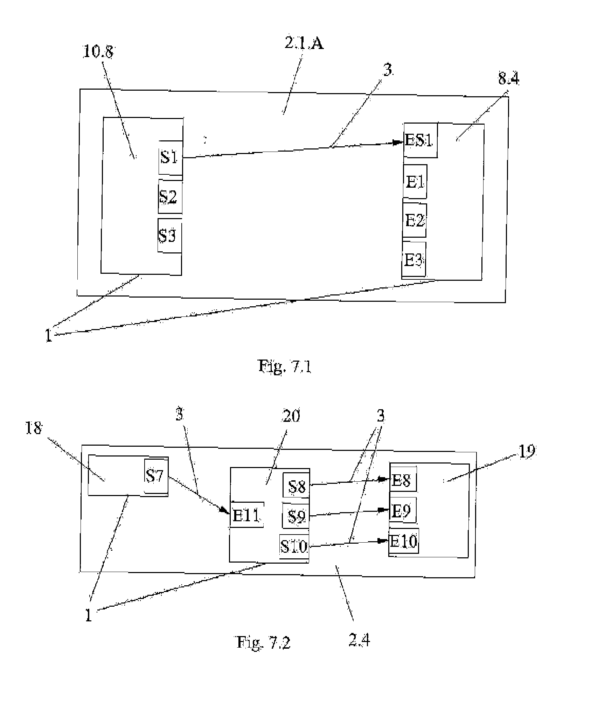

Scenario 5 (Entrance Hall): In Figure 7.1 it can be seen how the links (3) are configured to operate a presence detector located in the entrance hall of the flat which switches on the light when it detects somebody passing by and switches off otherwise. In Figure 7.1 the double relay node (2.1.A) is represented with the elements involved in this scenario, although it comprises more elements which in this case are not represented.

The links for the video intercom node (2.4) are also configured and can be seen in Figure 7.2, so that when somebody rings the bell, this event is notified to the user's mobile phone element and they can trigger the video intercom (19) element from their mobile phone.

For the presence detector we have, at a system level, a switching element (10.8) called the presence detector switch with three output connections: "Value" (S1), "On" (S2) and "Off" (S3), and also a relay element (8.4) with an input and output connection "value" (ES1) and three input connections "On" (E2), "Off" (E3) and "Toggle" (E1). Linking both "Value" connections (S1 and ES1), we ensure that the presence detector switching element (10.8) sends the activation event (3) to the relay (8.4) when a presence is detected and sends the deactivation event when it is not detected, whereas the relay element (8.4) determines whether the current can be sent to the light or not, depending on the value of the event that arrives.

To operate the video intercom (19) the system has an element called "ring the bell" (18), with a single output connection "Ring" (S7) that issues the event (3) that the call bell has been pressed; an element (20) associated with a mobile application, which can be installed on one or more elements outside the system but capable of interacting with it thanks to this abstraction. In the specific case of this preferred use of the invention, the application is installed in one or more mobile phones and the element has an input connection "Notify" (E11) responsible for receiving the event (3) and three output connections. One of these is the "Answer" (38) which issues the event (3) that the user wishes to start the communication, the second "Hang up" connection (S9) which issues the opposite event and finally the "Open door" connection (S10) that issues the event that the user wishes to open the door. Finally, the video intercom (19) element has three input connections (E8, E9 and E10), equal to the output connections of the mobile element.

The chosen configuration for this part of the system is that of linking the "Ring" connection (S7) of the first element (18) to the "Notify" connection (E11) of element (20) associated with the mobile application. Equally, the output connections (S8, S9 and S10) of element (20) associated with the mobile application are linked with their counterparts (E8, E9 and E10) on the video intercom element (19), so that any event issued from the mobile phone is performed by the video intercom. When the user receives the notification on their mobile phone that someone is calling at the door and opens the corresponding application, the image of the video intercom camera is re-transmitted to their phone. When the telephone is hung up, the image on the video intercom also shuts down. Equally, if the order is given from the telephone to open the door, the video intercom reproduces this, so it is not necessary to go to the terminal located in the entrance hall to operate this element.

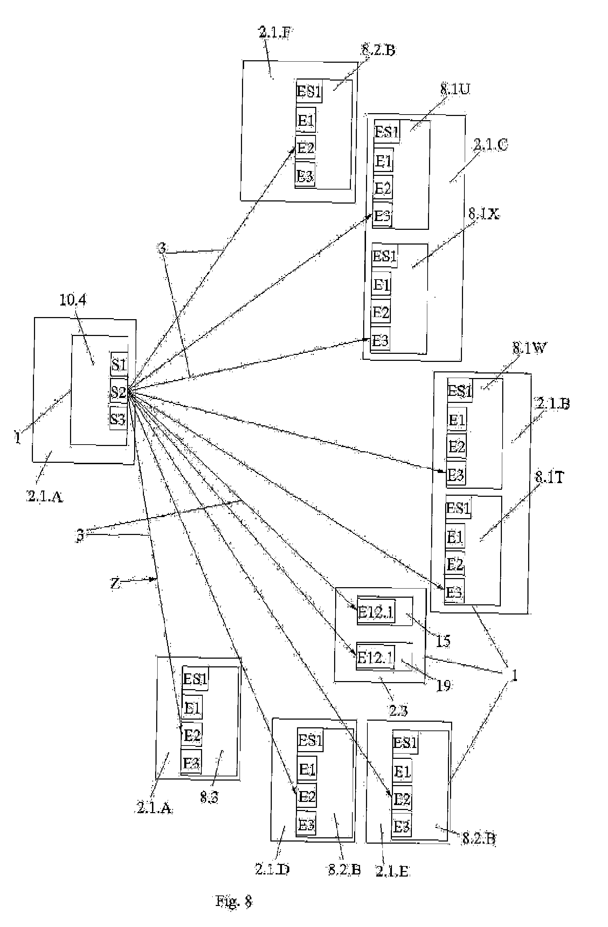

Scenario 6 (Switching off the house): Although the above scenarios are organised on the basis of grouping elements by area, as has been discussed, since all the nodes in the system are interconnected with each other it is possible to establish scenarios that affect different nodes and establish links between elements without it mattering where they are located. This is the case in this scenario, which is displayed in Figure 8, in which through a switch (10.4) located on the wall of entrance hall R, we can establish that the action of "switching off the house" is performed, consisting of all the blinds being shut, all lights being switched off, the A/C and TV being disconnected and, after a delay of 10 seconds, the front door being locked.

In the system we have an element (10.4) called "switch off house", with three output connections "Value" (S1), "On" (S2) and "Off" (S3), which is linked with the following elements in the flat: Lower blind relay (8.2.B) of the double relay node 2.1.F (bedroom), Light relay (8.1U) in the bedroom of the double relay node 2.1.C, Light relay (8.1W) in the "bathroom and Light relay (8.1T) in the kitchen of the double relay node 2.1.B, Switch off A/C (15) and Switch off TV (19) of the Infra-red node 2.3, Light relay (B.1X) in the living room of the double relay node 2.1.C, Lower blind relay (8.2.B) of the double relay node 2.1.D and double relay 2.1.E (both in the living room) and finally, Close front door relay (8.3) of the double relay node 2.1.A.

The links (3) to be performed all start from the "On" connection (S2) of the Switch off house (9) element and go to the "On" input connections (E2) of all the Lower blind (8.2.B) elements, to all the "Off" input connections (E3) of the Kitchen light relay (8.1T), Bedroom light relay (8.1U), Bathroom light relay (8.1U) and Living room light relay (8.1X) elements, to the "Pulse" input connections (E12.1) of the IR1 node elements and, following a delay (Z) of ten seconds through the link modifying option, to the "On" input connection (E2) of the Close front door relay (8.3) element.

It is obvious that the arrangement of the different scenarios does not present any limitation, being able to establish as many as are desired based on the functionalities required for the installation.

Equally, there is the option to add a new node to the system if necessary, for example, in the case of extending the property and adding a new room, which requires at least one new double relay node to control the lights and another to control the blind. In this case the nodes to be added must be configured in their hardware and software layers in order to adjust the operation of the elements that contain the function we wish to obtain with them.

So, for example, in the case of a new node to control the light in a new room, we must add a new double relay node to the system. As it is the same node as another already existing in the system, which has therefore already been created and exists on the market, we simply need to add it to the system and the configuration tool will configure the node.

If we are dealing with a node not previously available on the market, the developer or person interested in developing the new node must configure both its hardware layer, in this case formed by an element module with two relays and six switches, an RS-485 type communication protocol and a control unit consisting of a micro-controller and its software layer.

The developer implements the specification of the node's software layer, i.e., the code that defines the parameters and properties of the node, as well as the elements it contains, the links and the options for it. This is done with the existing tools on the electronic developments market and having a software library for the system that is provided and includes each and every one of the necessary layers, including Runtime, so that the node operates correctly in the system.

In this way, on connecting the new double relay node, thanks to its software layer, specifically runtime, it is responsible for communicating its existence in the system to the other nodes and the configuration tool.

When the new double relay node is detected, the configuration software tool is responsible for translating the specification of the node into the system's logic through the runtime in the node's software layer, so the node is configured so that the system can use it.

The distributed system's software configuration tool for this preferred use of the invention comprises a programming application that enables this to be performed visually through the screen of a terminal.

Through the system's configuration software tool any configuration, link or option of the system can be modified, and it is possible to connect to all the nodes and establish the configuration linked to each one. It is also responsible for representing the configuration "map" between the different elements of the nodes, as well as representing and signalling any anomalies in the system.

Thanks to this tool, the entire system's configuration process becomes a simple task, however complex the functionality that you want to achieve.

Since it is visual programming, any change that the user wants to make is extremely intuitive and easy, without the need for any special training or qualifications. Additionally, this visual programming does not generate code as the only thing it generates is a pseudo-configuration that is later executed in the runtime of each node, eliminating all the time previously needed to develop, test and debug and consequently reducing the costs associated with any existing developments.

Also discussed in this report is the operating procedure of the distributed system in this preferred use of the invention. This procedure comprises a series of phases.

In this preferred use of the invention, every double relay (2.1), double solenoid valve (2.2), infra-red (2.3) and video Intercom (2.4) node receives events at a certain time. In Figure 12, the operating procedure of the distributed system proposed here is represented in a block diagram, for the case of Scenario 6 of this preferred use of the invention which, as has been defined before, manages the action of switching off the house.

Therefore, in this example of a possible action in this preferred use of the invention, the first phase comprises the activation (23) in the double relay node (2.1 A) of the event to switch off the house through pressing the switch (10.4) linked to the one on the wall.

The second phase comprises the receipt (24), in a series of nodes connected through links (3) to this first double relay node (2.1.A), of the event coming from it. Therefore, for this action of switching off the house, the receipt of the event activated in the first double relay node (2.1.A) is performed in the double relay node (2.1.F) and double relay (2.1.C) located in bedroom U, in double relay (2.1.B) located in kitchen T, In the infra-reds (2.3), double relay (2.1.C), double relay (2.1.E) and double relay (2.1.D) all located in living room X and double relay (2.1.A) in the entrance hail 4.1.

Next, the third phase comprises the processing (25) of the event's information by those nodes, at which the event activated in the first (2.1.A) arrives.

After the information has been processed, the following phase is the receipt (26) of this in at least one element built into those receiver nodes. Or, in other words, in this possible action carried out in this preferred use of the invention we have the reception of the event in the "lower blind" relay (8.2.B) of double relay node (2.1.F) of bedroom U, in the "bedroom light" relay (8.1 U) of double relay node (2.1.C), in the "bathroom light" relay (8.1W) and "kitchen light" relay (8.1T) of double relay node (2.1.B), in the "Switch off A/C" (15) and "Switch off TV" (19) of Infra-red node (2.3), in the "living room light" relay (8.1X) of double relay node (2.1.C), in the "lower blind" relay (8.2.B) of double relay node (2.1.E) and double relay (2.1.D) in the living room and finally, in the "close front door" relay (8.3) of double relay node 2.1.A.

The execution (27) of the information about that event is then performed, which lowers the blinds, switches off the lights, television and air-conditioning and locks the front door.

The last phase of the procedure comprises checking (28) the elements built into the receiver nodes to see if, according to their configuration, a new event must be generated or not. In other words, in this preferred use of the invention we have the "lower blind" relay (8.2.B) of double relay node (2.1.F) of bedroom U, in the "bedroom light" relay (8.1U) of double relay node (2.1.C), in the "bathroom light" relay (8.1W) and "kitchen light" relay (8.1T) of double relay node (2.1.B), in the "Switch off A/C" (15) and "Switch off TV" (19) of Infra-red node (2.3), in the "living room light" relay (8.1U) of double relay node (2.1.C), in the "lower blind" relay (8.2.B) of double relay node (2.1.E) and double relay (2.1.D) in the living room and finally, in the "close front door" relay (8.3) of double relay node (2.1.A).

In this case set out in relation to Scenario 6, the procedure (29) is completed here, because the configuration of these elements does not determine (28.1) the creation of any other event. However, in other cases a new event (28.2) could indeed be generated depending on the configuration of each element and the process would be repeated.

Another differentiated part of this operating procedure is the receipt and sending of events from the configuration tool to register and configure each node. In the particular case of this preferred use of the invention, this part of the procedure has no relevance, but it could do in the case of wanting to integrate a new node that is not initially part of the system and that must be previously registered and configured in it so that it is recognised.

With the distributed system of elements built into nodes presented here, significant improvements are achieved compared to the current technology.

In this way, thanks to the modularisation of the system into layers, it is possible to control anything from a simple device to an existing complex automated installation that operates with another system, with the only difference between these two cases being the layers that comprise the node.

It is also a distributed system that does not require a switchboard or monitor to coordinate the system's elements because the operation of each element is controlled through the joint action of all the nodes and such behaviour may be configured through a computer application that establishes the links between devices. However, despite being distributed, it is easily configurable from a single location, without having to configure each element one-by-one.

This system also allows for simple expansion to include new nodes without needing to make changes to the hardware and software, beyond the introduction of the new node and the specification of its features in the system.

It is a system capable of controlling and managing external systems and it allows for them to all be configured in the same way, therefore making systems compatible that were previously incompatible.

It is also a versatile and scalable system that can absorb both existing systems and future technologies and systems.

The system also allows for a simple visual configuration that can be understood by any user without needing an expert's assistance.

In this way it results in the development of a system that can be configured to provide the desired solution without needing a manual and difficult configuration of the devices in the system, as this is performed in a computerised and visual way. There is also the option to expand it to any other type of system, regardless of the protocol it uses.

As a final conclusion, one of the advantages of the system, which sets it apart from those already on the market, in addition to the abstraction of the proposed philosophy, is the easy and intuitive way to configure the functionalities to be obtained, thanks to a large extent to the system configuration tool. The system's philosophy gives us its versatility and scalability, i.e., it provides the ability to adapt the system to meet any need. However, the tool provides the ability to make that change, once the appropriate nodes have been developed, in a matter of minutes, avoiding developments that are very costly in terms of both time and money Once the system has been configured, the tool is no longer needed, and this tool does not have to be taken as a central control program because its use is limited to the system's initial configuration or possible expansions.

## Claims

1. Distributed system of elements (1) built into nodes (2) for the control and management of electronically controllable elements, based on events and configured through a configuration software tool using links (3) between the nodes (2) that comprise the system. It is **characterised by** comprising at least one node (2) that integrates at least one element (1), which may be physical or virtual, the latter being those that expand the node's functionalities without having a physical reflection in the hardware, and having certain and specific features where each node (2) consists of a first hardware layer that comprises a control unit, a physical element module and a module of communication with the configuration software tool, and a second software layer that comprises a kernel, a driver for the physical elements, a driver for communicating with the configuration software tool, an operating system, a library of the system with all its information, an execution or runtime part and the specification of the node that has to be registered, being some or other parts of the layers of each node implemented depending on the type of node and its function and, where the elements of each node are related to elements of the same node or of a different node, through links that determine the way towards which each order or event circulates. The functionality of each element is defined by at least one link (3) and at least one configuration of element (1) that is translated into the system's language through the configuration software tool.

2. Distributed system of elements (1) built into nodes (2) for the control and management of electronically controllable elements, according to claim (1) is **characterised by** the links (3) between elements (1) including modifiers of the order or event that apply a logical or mathematical operation to the value of that event, in order to modify that value before it arrives at its destination, in such a way that the event is performed under specific conditions determined by the user.

3. Distributed system of elements (1) built into nodes (2) for the control and management of electronically controllable elements, according to any of the previous claims is **characterised by** the links (3) between elements (1) being performed through the input, output or input/output connection points of events existing in every element (1).

4. Distributed system of elements (1) built into nodes (2) for the control and management of electronically controllable elements, according to any of the previous claims is **characterised by** the communication between nodes (2), whose communication modules with the configuration software tool are based on different physical communication protocols, being performed through a bridge between physical protocols which translates, at a hardware level, between one communication method and another.

5. Distributed system of elements (1) built into nodes (2) for the control and management of electronically controllable elements, according to any of the previous claims is **characterised by** the communication between this system and any other system or application that uses a different communication protocol software being made through a proxy node, which is a translator between systems. The node's specification in the software layer of that proxy node is responsible for communicating with the other system and translating the information bi-directionally between the two.

6. Distributed system of elements (1) built into nodes (2) for the control and management of electronically controllable elements, according to any of the previous claims is **characterised by** the system's configuration software tool comprising a programming application that allows this to be performed visually through the screen of a terminal, establishing in it the links between the elements and their configuration, in order to obtain the desired functionality in the system.

7. Operating procedure of a distributed system of elements (1) built into nodes (2) for the control and management of electronically controllable elements, based on events such as those defined in claims 1 to 6 is **characterised by** consisting of, on one hand the reception and sending of events for the registration and configuration of each node from the configuration tool, and, on another hand of:
- the activation (23) of the sending of "at least one event" by at least one first node (2);
- the receipt (24) in "at least one second node"" of at least one event" coming from the first node;
- the processing of the information (25) of the event by "at least one second node";
- the receipt (26) of that "at least one event" in the "at least one element" (1) built into the second node, a recipient of these;
- the execution (27) of the same;
- the checking (28), in the "at least one element" (1) built into the second node, according to its configuration, of whether a new event must be generated or not, and;
- the generation of a new event (28.2), if the configuration of that "at least one element" 1 that integrates the second node if so determined, sending it to the corresponding node, or completing the procedure (29) otherwise (28.1).

## Amended claims

### Amended claims under Art. 19.1 PCT

**1.** Distributed system of elements (1) built into nodes (2) for the control and management of electronically controllable elements, based on events and configured through a configuration software tool using links (3) between the nodes (2) that comprise the system. It is **characterised by** comprising at least one node (2) that integrates at least one element (1), which may be physical or virtual, the latter being those that expand the node's functionalities without having a physical reflection in the hardware, and have certain and specific features. In the system, each node (2) consists of a first hardware layer that comprises a control unit, a physical element module and a module of communication with the configuration software tool, and a second software layer that comprises a kernel, a driver for the physical elements, a driver for communicating with the configuration software tool, an operating system, a library of the system with all information about the distributed system, an execution or runtime part, which is responsible for operating each Individual node, and the specification of the node that has to be registered. The parts of the layers of each node implemented depend on the type of node and its function, and the elements of each node are related to elements of the same node or other nodes through links that determine the way in which each order or event circulates. The functionality of each element is defined by at least one link (3) and at least one configuration of element (1) that is translated into the system's language through the configuration software tool.

**2.** Distributed system of elements (1) built into nodes (2) for the control and management of electronically controllable elements, according to claim (1) is **characterised by** the links (3) between elements (1) including modifiers of the order or event that apply a logical or mathematical operation to the value of that event, in order to modify that value before it arrives at its destination, in such a way that the event is performed under specific conditions determined by the user.

**3.** Distributed system of elements (1) built into nodes (2) for the control and management of electronically controllable elements, according to any of the previous claims is **characterised by** the links (3) between elements (1) being performed through the input, output or input/output connection points of events existing in every element (1).

**4.** Distributed system of elements (1) built into nodes (2) for the control and management of electronically controllable elements, according to any of the previous claims is **characterised by** the communication between nodes (2), whose communication modules with the configuration software tool are based on different physical communication protocols, being performed through a bridge between physical protocols which translates, at a hardware level, between one communication method and another.

**5.** Distributed system of elements (1) built into nodes (2) for the control and management of electronically controllable elements, according to any of the previous claims is **characterised by** the communication between this system and any other system or application that uses a different communication protocol software being made through a proxy node, which is a translator between systems. The node's specification in the software layer of that proxy node is responsible for communicating with the other system and translating the information bi-directionally between the two.

**6.** Distributed system of elements (1) built into nodes (2) for the control and management of electronically controllable elements, according to any of the previous claims is **characterised by** the system's configuration software tool comprising a programming application that allows this to be performed visually through the screen of a terminal, establishing in it the links between the elements and their configuration, in order to obtain the desired functionality in the system.

**7.** Operating procedure of a distributed system of elements (1) built into nodes (2) for the control and management of electronically controllable elements, based on events such as those defined in claims 1 to 6 is **characterised by** consisting on the one hand of the configuration from any node, determining the receipt and sending of events for the registration and configuration of each node from the configuration tool, which is then disconnected, and on the other hand of the operation itself, which comprises:
- the activation (23) of the sending of "at least one event" by at least one first node (2);
- the receipt (24) in "at least one second node"" of at least one event" coming from the first node;
- the processing of the information (25) on the event by "at least one second node" (2);
- the receipt (26) of that "at least one event" in the "at least one element" (1) built into the second node, a recipient of these;
- the execution (27) of this;
- the checking (28), in "at least one element" (1) built into the second node of whether, according to its configuration, a new event must be generated or not, and;
- the generation of a new event (28.2) if the configuration of that "at least one element" 1 that integrates the second node so determines, sending it to the corresponding node, or completing the procedure (29) otherwise (28.1).

**8.** Operating procedure of a distributed system of elements (1) built into nodes (2), according to claim 7 is **characterised by** the system being made up of a single node, with the procedure including its configuration determining the receipt and sending of events for registering and configuring that single node from the configuration tool, which is then disconnected, and the operation itself which comprises:
- the activation (23) of the sending of "at least one event" by "at least one first element" (1) built into the node;
- the receipt (24) in "at least one second element" (1) of the node (2) of "at least one event" coming from the first element (1);
- the processing of the information (25) on the event by "at least one second element" (2);
- the execution (27) of this:
- the checking (28), in the "at least one second element' (1) built into the node of whether, according to its configuration, a new event must be generated or not, and;
- the generation of a new event (28.2) if the configuration of that "at least one second element" (1) that integrates the node so determines, sending it to the element corresponding to the node or completing the procedure (29) otherwise (28.1).
